(19) Europäisches Patentamt
European Patent Office
Office européen des brevets

(11) EP 2 557 117 B1

(12) EUROPEAN PATENT SPECIFICATION

(45) Date of publication and mention of the grant of the patent:
**11.06.2014 Bulletin 2014/24**

(51) Int Cl.:
***C08L 23/10*** *(2006.01)*

(21) Application number: **11177307.3**

(22) Date of filing: **11.08.2011**

(54) **Composition with improved scratch visibility and low surface tack**

Zusammensetzung mit verbesserter Kratzbeständigkeit und Reduzieren von deren Oberflächenklebrigkeit

Composition dotée d'une meilleure résistance aux rayures et réduire leur caractère poisseux en surface

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.02.2013 Bulletin 2013/07**

(73) Proprietor: **Borealis AG**
**1220 Vienna (AT)**

(72) Inventors:
- **Grestenberger, Georg**
  **3352 St. Peter in der Au (AT)**
- **Bernreitner, Klaus**
  **4010 Linz (AT)**
- **Simon, Sybille**
  **4020 Linz (AT)**
- **Reisecker, Michael**
  **4921 Hohenzell (AT)**

(74) Representative: **Maiwald Patentanwalts GmbH**
**Elisenhof**
**Elisenstrasse 3**
**80335 München (DE)**

(56) References cited:
**WO-A1-2009/092691**
**US-A1- 2004 014 891**
**US-A1- 2006 009 554**
**US-A1- 2010 152 360**
**US-A1- 2010 240 818**

- **R. HÖFNER K. HINRICHS: "Additives for the manufacturing and processing of polymers", THE HANDBOOK OF ENVIRONMENTAL CHEMISTRY , vol. 12 2010, XP002660413, DOI: 10.1007/698_2009_12 Retrieved from the Internet: URL:http://www.springerlink.com/content/r2522u72770h481n/ [retrieved on 2011-10-04]**
- **KOCH ET AL: "Evaluation of scratch resistance in multiphase PP blends", POLYMER TESTING, vol. 26, no. 7, 27 September 2007 (2007-09-27), pages 927-936, XP022276380, ELSEVIER ISSN: 0142-9418, DOI: 10.1016/J.POLYMERTESTING. 2007.06.006**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention is directed to a new heterophasic propylene copolymer (HECO) composition as well as to an article comprising the HECO composition. Furthermore the present invention relates to use of the HECO composition.

Automotive interior parts like dashboards, door claddings, trims are commonly made from polymers. Especially propylene based resins are widely used for these applications. For such parts it is often tried to mimic a leather- or fabric-like surface and touch in order to give occupants a high-quality impression of the car. As a result materials used should provide a low surface gloss level and good haptics. Additionally to maintain the high-quality perception of the parts till the end of the car's lifetime the polymer should provide a high resistance to scratches e.g. from keys, fingernails, rings.

In comparison to metals polymers have rather low stiffness and surface hardness and thus are much more prone to scratches. Therefore apart from material design and filler addition usually additives are used to overcome this drawback.

WO 2006/131455A1 discloses an additive combination that is claimed to provide improved scratch resistance to polyolefins. In particular a polyolefin composition is claimed comprising the following components

a) a polyolefin substrate and an amount effective to improve the scratch resistance and light stability of said polyolefin substrate of an additive combination of

b) a carboxylic acid reagent functionalized olefin polymer or copolymer, c) a primary or secondary fatty acid amide and d) a combination of i) a low molecular weight sterically hindered amine light stabilizer and ii) a high molecular weight sterically hindered amine light stabilizer.

It is known to people skilled in the art that scratch resistance of impact polypropylene (PP) / talc compounds can be improved by the addition of slip agents and high-density polyethylene (HDPE), e.g. compare WO 2007/139622A3, WO 02/22731A2, WO 2005/111145A1. HDPE affects the morphology of the dispersed rubber phase stabilizing the surface and immediate subsurface layer of injection moldings.

On the other hand slip agents like fatty acid amides (Erucamide, Oleamide, Stearamide, Behenamide) reduce the coefficient of friction of polymeric surfaces by migrating from the bulk to the surface.

In combination both mechanisms lead to very cost efficient scratch resistant material formulations. However apart from scratch visibility and gloss also haptics is becoming more and more important for interior applications. One factor in this respect is the surface tack of a part. Unfortunately it was found that e.g. fatty acid amides in fact lead a tacky feel of the surface.

Accordingly the object of the present invention is to provide a polymer composition with improved scratch visibility and low surface tack.

The finding of the present invention is that two different slip agents must be used being not a saturated fatty acid amid.

Thus the present invention is directed to a composition comprising

(a) polyolefin, more preferably a polypropylene, still more preferablya heterophasic propylene copolymer (HECO), and

(b) two different slip agents, namely

(b1) a fatty acid amid derivative of formula (I)

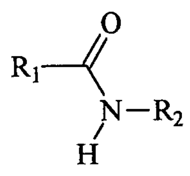

wherein

$R_1$ is a $C_5$ to $C_{25}$ alkyl residue or $C_5$ to $C_{25}$ alkenyl residue,

$R_2$ is a long-chain organic residue containing at least 6 carbon atoms, and

(b2) an unsaturated fatty acid amide, preferably a mono-unsaturated fatty acid amide.

Preferably the fatty acid amid derivative (b1) and the unsaturated fatty acid amide (b2) are the only slip agents in the composition.

The present invention discloses a simple solution to maintain the high scratch resistance and at the same time to reduce the surface tack. Surprisingly it has been found out that a combination of components (b1) and (b2) resolve the problem that on the one hand a high scratch resistance is obtained and on the other hand the surface tack is reduced.

In the following the present invention is defined in more detail.

**Heterophasic propylene copolymer (HECO)**

One essential component is the presence of a heterophasic propylene copolymer. Heterophasic polymer systems are well known in the art and are systems in particular obtained in a process comprising at least two steps resulting in a multiphase structure comprising a polypropylene matrix and inclusions therein comprising amorphous elastomer. Such systems can be easily tailored for the automotive requirements by setting the comonomer content in the polypropylene matrix and in the elastomeric phase respectively.

More precisely, a heterophasic propylene copolymer (HECO) according to this invention comprises as matrix a random propylene copolymer or a propylene homopolymer and dispersed therein an elastomeric propylene copolymer. Thus the matrix contains (finely) dispersed inclusions being not part of the matrix and said inclusions contain the elastomeric propylene copolymer. The term inclusion indicates that the matrix and the inclusion form different phases within the heterophasic propylene copolymer (HECO), said inclusions are for instance visible by high resolution microscopy, like electron microscopy or scanning force microscopy.

Preferably the heterophasic propylene copolymer (HECO) may contain further additives but no other polymer in an amount exceeding 5 wt.-%, more preferably exceeding 3 wt.-%, like exceeding 1 wt.-%, based on the total amount of the heterophasic polymer. One additional polymer which may be present in such low amounts is a polyethylene which is a reaction product obtained by the preparation of the heterophasic propylene copolymer (HECO). Accordingly it is in particular appreciated that a heterophasic propylene copolymer (HECO) as defined in the present invention contains only a polypropylene matrix, an elastomeric propylene copolymer, and optionally a polyethylene in amounts as mentioned in this paragraph.

Preferably the propylene content in the heterophasic polymer is in the range of 70 to 92 wt.-%, more preferably in the range of 75 to 85 wt.-%, yet more preferably in the range of 78 to 82 wt.-%, based on the total amount of the heterophasic propylene copolymer (HECO), more preferably based on the amount of the polymer components of the heterophasic propylene copolymer (HECO), yet more preferably based on the amount of the polypropylene matrix and the elastomeric propylene copolymer together. The remaining part constitutes the comonomers as defined for the polypropylene matrix being a random propylene copolymer and the elastomeric propylene copolymer, respectively, preferably ethylene. Accordingly the comonomer content, preferably ethylene content, for the total heterophasic propylene copolymer (HECO) is in the range of 8.0 to 30.0 wt.-%, more preferably in the range of 15.0 to 25.0 wt.-%, still more preferably in the range of 18.0 to 22.0 wt.-%, based on the total amount of the heterophasic propylene copolymer (HECO), more preferably based on the amount of the polymer components of the heterophasic propylene copolymer (HECO), yet more preferably based on the amount of the polypropylene matrix and the elastomeric propylene copolymer together.

The polypropylene matrix of the heterophasic propylene copolymer (HECO) can be made of the propylene homo- and/or copolymer only but can also comprise additional polymers, in particular polymers which can be blended homogeneously with the propylene homo- or copolymer and together form a continuous phase which can act as a matrix. In a preferred embodiment, at least 80 wt.-% of the matrix, more preferably at least 90 wt.-%, even more preferably at least 95 wt.-% of the matrix are made of the propylene homo- and/or copolymer. Even further preferred, the matrix consists of the propylene homo- and/or copolymer.

The propylene homo- and/or copolymer forming the matrix can be a random propylene copolymer or a propylene homopolymer. In a preferred embodiment, the matrix is a propylene homopolymer.

For the purpose of the present invention, the expression "propylene homopolymer" refers to a polypropylene that consists substantially, i.e. of at least 97 wt.-%, preferably of at least 98 wt.-%, more preferably of at least 99 wt.-%, most preferably of at least 99.8 wt.-% of propylene units. In a preferred embodiment only propylene units in the propylene homopolymer are detectable.

In case the propylene homo- and/or copolymer forming the matrix is a random propylene copolymer it comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the random propylene copolymer comprises, especially consists of, monomers copolymerizable with propylene from the group consisting of ethylene, 1-butene and 1-hexene. More specifically the random propylene copolymer comprises - apart from propylene - units derivable from ethylene and/or 1-butene. In a preferred embodiment the random propylene copolymer comprises units derivable from ethylene and propylene only. The comonomer content in the random propylene copolymer is preferably in the range of more than 0.5 to 10.0 wt.-%, still more preferably in the range of more than 0.5 to 7.0 wt.-%.

The propylene homo- and/or copolymer matrix can have a xylene cold soluble content (XCS) in a broad range, i.e. up to 6.0 wt.-%, based on the total amount of propylene homo- and/or copolymer matrix. Accordingly the propylene homo- and/or copolymer matrix may have a xylene cold soluble content (XCS) in the range from 0.3 to 6.0 wt.-%, e.g., from 0.5 to 5.5 wt.-%, based on the amount of the propylene homo- and/or copolymer matrix.

According to a preferred embodiment the matrix is a propylene homopolymer having a xylene cold soluble (XCS) content in the range from 0.5 to 4.5 wt.-%, more preferably in the range from 0.8 to 4.0 wt.-%, still more preferably from 0.8 to 3.5 wt.-%.

According to one embodiment of the present invention, the polypropylene matrix has a melt flow rate $MFR_2$ (230 °C) of 10 to 300 g/10 min, preferably in the range from 25 to 150 g/10 min, more preferably in the range from 30 to 120 g/10 min.

Accordingly it is preferred that the propylene homo- and/or copolymer forming the matrix has a weight average molecular weight (Mw) from 100000 to 400000 g/mol, preferably from 150000 to 350000, more preferably from 175000 to 300000 g/mol.

In addition to the polypropylene matrix phase, the heterophasic propylene copolymer (HECO) comprises an elastomeric propylene copolymer which is dispersed within said matrix.

According to one embodiment, the elastomeric propylene copolymer comprises monomers copolymerizable with propylene, for example, comonomers such as ethylene and/or $C_4$ to $C_{12}$ $\alpha$-olefins, preferably ethylene and/or $C_4$ to $C_{10}$ $\alpha$-olefins, e.g. 1-butene and/or 1-hexene. Preferably the elastomeric propylene copolymer comprises, especially consists of, monomers copolymerizable with propylene from the group consisting of ethylene, 1-butene and 1-hexene. More specifically the elastomeric propylene copolymer comprises - apart from propylene - units derivable from ethylene and/or 1-butene. Thus, in an especially preferred embodiment the elastomeric propylene copolymer phase comprises units derivable from ethylene and propylene only.

In case the polypropylene matrix is a random propylene copolymer it is preferred that the comonomer(s) of the random propylene copolymer and the elastomeric propylene copolymer are the same.

The properties of the elastomeric propylene copolymer mainly influences the xylene cold soluble (XCS) content of the heterophasic propylene copolymer (HECO). Thus, according to the present invention the xylene cold soluble (XCS) fraction of heterophasic propylene copolymer (HECO) is regarded as the elastomeric propylene copolymer of the heterophasic propylene copolymer (HECO).

According to one embodiment of the present invention, the amount of the elastomeric propylene copolymer, i.e. of the xylene cold soluble (XCS) fraction, of the heterophasic propylene copolymer (HECO) is in the range from 15 to 50 wt.-%, preferably in the range from 20 to 40 wt.-%, and more preferably in the range from 25 to 38 wt.-%, based on the total amount of the heterophasic propylene copolymer (HECO).

A further preferred requirement of the present invention is that the intrinsic viscosity (IV) of the xylene cold soluble (XCS) fraction of the heterophasic propylene copolymer (HECO) is rather high. Rather high values of intrinsic viscosity improve the impact strength. Accordingly it is appreciated that the intrinsic viscosity of the xylene cold soluble (XCS) fraction of heterophasic propylene copolymer (HECO) is above 1.5 dl/g, more preferably at least 1.8 dl/g, yet more preferably at least 2.0 dl/g, like at least 2.3 dl/g. On the other hand the intrinsic viscosity should be not too high otherwise the flowability is decreased. Thus the intrinsic viscosity of the xylene cold soluble (XCS) fraction of the heterophasic propylene copolymer (HECO) is preferably in the range of 1.8 to 4.5 dl/g, more preferably in the range 2.0 to 4.1 dl/g, still more preferably 2.3 to 4.0 dl/g.

According to one embodiment, the heterophasic propylene copolymer (HECO) of the present invention has a rather high melt flow rate. Accordingly it is preferred that the heterophasic polymer has a melt flow rate $MFR_2$ (230 °C) of at least 8 g/10 min, more preferably in the range from 8 to 300 g/10 min, and most preferably in the range from 10 to 100 g/10 min, still more preferably in the range from 10 to 80 g/10 min.

Processes for preparing heterophasic polymer systems are well known in the art, and are multi-step processes containing at least two process steps. A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315. A further suitable slurry-gas phase process is the Spheripol® process of Basell.

According to one embodiment of the present invention, the heterophasic propylene copolymer (HECO) is obtained by producing the polypropylene matrix phase (M) in at least one reactor, transferring said matrix phase in at least one subsequent reactor, where in presence of the matrix the elastomeric propylene copolymer is produced.

A suitable catalyst for the polymerization of the heterophasic polymer composition is any stereospecific catalyst for propylene polymerization which is capable of polymerizing and copolymerizing propylene and comonomers at a temperature of 40 to 110°C and at a pressure from 10 to 100 bar. Ziegler-Natta as well as metallocene catalysts are suitable catalysts. One skilled in the art is aware of the various possibilities to produce such heterophasic polymers and will simply find out a suitable procedure to produce suitable heterophasic polymers which can be used in the present invention.

Especially preferred the heterophasic polypropylene is the commercial product EF 015 AE of Borealis AG.

**Slip agents**

The finding of the present invention is that the composition must comprise two different specific slip agents. A slip agent according to this invention is an additive that gradually migrates to the surface and/or reduces the coefficient of friction of the surface of an article made form a composition containing said slip agent.
Accordingly it has surprisingly found out that the inventive composition must comprise

(b1) a fatty acid amid derivative of formula (I)

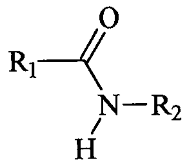

wherein

$R_1$ is a $C_5$ to $C_{25}$ alkyl residue or $C_5$ to $C_{25}$ alkenyl residue,
$R_2$ is a long-chain organic residue containing at least 6 carbon atoms, and

(b2) an unsaturated fatty acid amide, preferably a mono-unsaturated fatty acid amide.

The term "amid" (unsaturated fatty acid amide) shall indicate that the amide group is - $CONH_2$. In contrast to this expression the term "amide derivative" (fatty acid amid derivative) indicates that the nitrogen atom of the amide group covers organic residues (-CONHR).
The term "long-chain organic residue" covers long chain aliphatic residues, like alkyl residues and alkenyl residues, as well as aliphatic residues comprising functional groups included in the chain, like -NH-CO-, -NH-, -CO-, or -O-.
Preferably the fatty acid amid derivative of formula (I) is contained in a range between 1000 ppm to 2000 ppm, more preferred in a range 1300 ppm to 1700 ppm in the instant composition.
Preferably the unsaturated fatty acid amide is contained in a range between 1000 ppm to 2000 ppm, more preferred in a range 1300 ppm to 1700 ppm in the instant composition.
The composition comprises the fatty acid amid derivate of formula I and the unsaturated fatty acid amide in a range of 1000 ppm to 2000 ppm.
Moreover it has been found that especially good results are obtained in case a fatty acid amid derivative of formula (I) and unsaturated fatty acid amide are contained in a relation between 0.5 : 1.5 and 1.5 : 0.5, preferably in a relation between 0.8 : 1.3 and 1.3 : 0.8, more preferably in a relation of 1.0 : 1.0.
Fatty acids, like fatty acid amides, are known to the skilled person. Typically a fatty acid and its derivatives contain an unbranched long chain aliphatic residue. Thus according to the present invention the residues of the slip agents are unbranched. More precisely the $C_5$ to $C_{25}$ alkyl residue or $C_5$ to $C_{25}$ alkenyl residue and the specific embodiments thereof are unbranched.
The $R_1$ residue of the fatty acid amid derivative of formula (I) is preferably a $C_{10}$ to $C_{25}$ alkyl residue or $C_{10}$ to $C_{25}$ alkenyl residue.
The $R_2$ residue of the fatty acid amid derivative of formula (I) is preferably selected from the group consisting of an aliphatic amide derivative residue containing 6 to 30 carbon atoms, an aliphatic alkyl residue containing 5 to 30 carbon atoms, and an aliphatic alkeny residue containing 5 to 30 carbon atoms.
Thus in one specific embodiment the $R_2$ residue is a $C_5$ to $C_{25}$ alkyl residue or a $C_5$ to $C_{25}$ alkenyl residue.
In another specific embodiment the $R_2$ residue is $R_4$-NH-CO-$R_5$, with
$R_4$ being a covalent bond or a $C_1$ to $C_6$ alkyl residue, like $-CH_2-$ or $-CH_2-CH_2-$, and
$R_5$ being a $C_5$ to $C_{25}$ alkyl residue or a $C_5$ to $C_{25}$ alkenyl residue, more preferably a $C_5$ to $C_{25}$ alkyl residue.
In one preferred embodiment the fatty acid amid derivative is of formula (Ia)

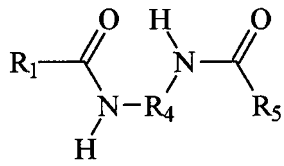

with

$R_1$ and $R_5$ being independently from each other a $C_5$ to $C_{25}$ alkyl residue, more preferably an unbranched $C_5$ to $C_{25}$ alkyl residue, still more preferably an unbranched $C_{10}$ to $C_{20}$ alkyl residue, like $-(CH_2)_nCH_3$, with n being a positive integer between 12 to 18, like 16, and

$R_4$ being a $C_1$ to $C_6$ alkyl residue, preferably an unbranched $C_1$ to $C_6$ alkyl residue, more preferably $-CH_2-$ or $-CH_2-CH_2-$, still more preferably $-CH_2-CH_2-$.

It is especially preferred that $R_1$ and $R_5$ are identical and are $-(CH_2)_nCH_3$, with n being a positive integer between 12 to 18, like 16. Accordingly in preferred embodiment the fatty acid amid derivative of formula (Ia) as stated in the previous paragraph is N,N'-bisstearoylethylenediamide ($CH_3(CH_2)_{16}CONHCH_2CH_2NHCO(CH_2)_{16}CH_3$).

In another preferred embodiment the fatty acid amid derivative is of formula (Ia)

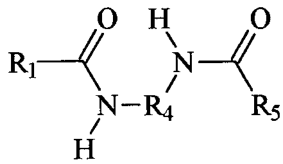

with

$R_1$ and $R_5$ being independently from each other a $C_5$ to $C_{25}$ alkenyl residue, more preferably an unbranched $C_5$ to $C_{25}$ alkenyl residue, still more preferably $-(CH_2)_xCH=CH(CH_2)_yCH_3$, with x = 4 to 15 and y = 3 to 10, preferably with x being a positive integer between 7 to 15 and y being a positive integer between 4 to 9.

$R_4$ being a $C_1$ to $C_6$ alkyl residue, preferably an unbranched $C_1$ to $C_6$ alkyl residue, more preferably $-CH_2-$ or $-CH_2-CH_2-$, still more preferably $-CH_2-CH_2-$.

It is especially preferred that $R_1$ and $R_5$ are identical and are $-(CH_2)_xCH=CH(CH_2)_yCH_3$, with x being positive integers between 4 to 15 and y being positive integers between 3 to 10, preferably with x being a positive integer between 7 to 15 and y being a positive integer between 4 to 9. Accordingly in preferred embodiment the fatty acid amid derivative is of formula (Ib) is N,N'-ethylene-bis-oleamide.

In still another preferred embodiment the fatty acid amid derivative is of formula (Ib)

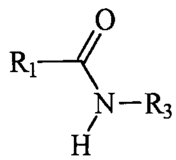

with

$R_1$ being a $C_5$ to $C_{25}$ alkyl residue, more preferably an unbranched $C_5$ to $C_{25}$ alkyl residue, still more preferably an unbranched $C_{10}$ to $C_{20}$ alkyl residue, like $-(CH_2)_nCH_3$, with n being a positive integer between 12 to 18, like 14, and

$R_3$ being a $C_5$ to $C_{25}$ alkyl residue or $C_5$ to $C_{25}$ alkenyl residue, preferably a $C_5$ to $C_{25}$ alkenyl residue, more preferably a $-(CH_2)_xCH=CH(CH_2)_yCH_3$, with x being a positive integer between 4 to 15 and y being a positive integer between 3 to 10, preferably with x being a positive integer between 7 to 15 and y being a positive integer between 4 to 9.

Thus it is especially preferred that

$R_1$ is $-(CH_2)_nCH_3$, with n being a positive integer between 12 to 18, like 14, and

$R_3$ is $-(CH_2)_xCH=CH(CH_2)_yCH_3$, with x being a positive integer between 4 to 15 and y being a positive integer

between 3 to 10, preferably with x being a positive integer between 7 to 15 and y being a positive integer between 4 to 9.

Accordingly in preferred embodiment the fatty acid amid derivative of formula (Ib) is N-9-octadecenyl hexadecanamide.

In yet another preferred embodiment the fatty acid amid derivative is of formula (Ib)

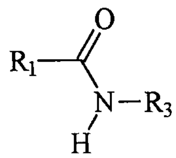

with

$R_1$ being a $C_5$ to $C_{25}$ alkenyl residue, preferably an unbranched $C_5$ to $C_{25}$ alkenyl residue, more preferably an unbranched $C_{10}$ to $C_{20}$ alkenyl residue, still more preferably - $(CH_2)_xCH=CH(CH_2)_yCH_3$, with x a positive integer between 4 to 15 and y a positive integer between 3 to 10, preferably with x a positive integer between 7 to 15 and y a positive integer between 4 to 9,
$R_3$ being a $C_5$ to $C_{25}$ alkyl residue or $C_5$ to $C_{25}$ alkenyl residue, preferably a $C_5$ to $C_{25}$ alkyl residue, more preferably an unbranched $C_5$ to $C_{25}$ alkyl residue, still more preferably an unbranched $C_{10}$ to $C_{20}$ alkyl residue, like $-(CH_2)_nCH_3$, with n a positive integer between 12 to 18, like 14.

Thus it is especially preferred that

$R_1$ is $-(CH_2)_xCH=CH(CH_2)_yCH_3$, with x a positive integer between 4 to 15 and y a positive integer between 3 to 10, preferably with x a positive integer between 7 to 15 and y a positive integer between 4 to 9, and
$R_3$ is $-(CH_2)_nCH_3$, with n a positive integer between 12 to 18, like 14.

Accordingly in preferred embodiment of the previous paragraph the fatty acid amid derivative of formula (Ib) is N-octadecyl-13-docosenamide

It is especially preferred that the fatty acid amid derivative of is of formula (Ia) and in particular is N,N'-bis-stearoylethylenediamide

$$(CH_3(CH_2)_{16}CONHCH_2CH_2NHCO(CH_2)_{16}CH_3).$$

But not only a fatty acid amid derivative of formula (I) must be present in the inventive composition but also an unsaturated fatty acid amide.

More preferably the unsaturated fatty acid amid is mono-unsaturated, i.e. contains only one ethylene group. Accordingly in one embodiment the unsaturated fatty acid amide is

$$CH_3(CH_2)_xCH=CH(CH_2)_yCONH_2$$

with x and y being independent from each other positive integers.
more preferably $CH_3(CH_2)_xCH=CH(CH_2)_yCONH_2$
with x and y being independent from each other positive integers.

In one preferred embodiment the x is a positive integer between 4 and 10 and/or y is a positive integer between 8 and 14, preferably x = 7 and y = 11.

Thus it is especially preferred that the unsaturated fatty acid amide is $CH_3(CH_2)_7CH=CH(CH_2)_{11}CONH_2$, i.e. erucamide.

Especially good results are achievable in case the instant composition does not contain an octadecanamide, in particular does not contain a saturated fatty acid amid. Accordingly it is especially appreciated that the fatty acid amid derivative of formula (I) [b1] and the unsaturated fatty acid amide [b2] are the only slip agents in the composition.

## Additional components

The inventive composition may additionally contain

(d) inorganic filler
and/or
(e) polypropylene homopolymer
and/or
(f) high density polyethylene (HDPE).

Also further additives know by a person skilled in the art can be contained apart from those preferably disclaimed below. One typical example of such further additive are antioxidants.
Preferably the inorganic filler is a phyllosilicate, mica or wollastonite. Even more preferred the inorganic filler is selected from the group consisting of mica, wollastonite, kaolinite, smectite, montmorillonite and talc. The most preferred the inorganic filler is talc.
The mineral filler preferably has a cutoff particle size d95 [mass percent] of equal or below 20 $\mu$m, more preferably below 10.0 $\mu$m, like below 8.0 $\mu$m.
Typically the inorganic filler has a surface area measured according to the commonly known BET method with $N_2$ gas as analysis adsorptive of less than 22 $m^2/g$, more preferably of less than 20 $m^2/g$, yet more preferably of less than 18 $m^2/g$. Inorganic fillers fulfilling these requirements are preferably anisotropic mineral fillers, like talc, mica and wollastonite.
To improve further the stiffness of the composition for instance a propylene homopolymer and/or a high density polyethylene can be added.
Preferably the propylene homopolymer has a melt flow rate $MFR_2$ (230 °C) of 10.0 to 50.0 g/10min, more preferably from 15.0 to 40.0 g/10min.
If present, the high density polyethylene (HDPE) has preferably a density measured according to ISO 1183in the range of 0.954 to 0.966 g/cm$^3$ and a melt flow rate ($MFR_2$ at 190 °C) of 1.0 to 50.0 g/10min, more preferably from 5.0 to 40.0 g/10min.

**Composition**

As mentioned above the instant composition must comprise

(a) a heterophasic propylene copolymer (HECO)
and
(b) two different slip agents, namely

(b1) a fatty acid amid derivative of formula (I)

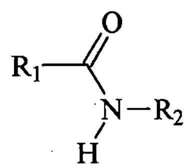

wherein

$R_1$ is a $C_5$ to $C_{25}$ alkyl residue or $C_5$ to $C_{25}$ alkenyl residue,
$R_2$ is a long-chain organic residue containing at least 6 carbon atoms, and

(b2) an unsaturated fatty acid amide, preferably a mono-unsaturated fatty acid

Optionally an inorganic filler and propylene homopolymer as well as a high density polyethylene (HDPE) can be present.
Accordingly the present invention is in particular directed to a composition comprising
Thus the present composition preferably comprises

(a) at least 40 wt.-%, more preferably 40 to 95 wt.-%, yet more preferably 45 to 75 wt.-%, of the heterophasic propylene copolymer (HECO),
(b) 1000 ppm to 2000 ppm, more preferred 1300 ppm to 1700 ppm of a fatty acid amid derivative of formula (I),
(c) 1000 ppm to 2000 ppm, more preferred 1300 ppm to 1700 ppm (mono-)unsaturated fatty acid amide, like

$CH_3(CH_2)_xCH=CH(CH_2)_yCONH_2$,

(d) optionally at least 5 wt.-%, more preferably 5 to 30 wt.-%, yet more preferably 7 to 25 wt.-%, of the inorganic filler,

(e) optionally at least 5 wt.-%, more preferably 5 to 30 wt.-%, yet more preferably 7 to 20 wt.-%, of the propylene homopolymer, and

(f) optionally at least 5 wt.-%, more preferably 5 to 30 wt.-%, yet more preferably 7 to 20 wt.-%, of the high density polyethylene (HDPE).

The composition of the present invention can be prepared by any suitable method known in the art, such as by blending the heterophasic propylene copolymer (HECO), the a fatty acid amid derivative of formula (I), the(mono-)unsaturated fatty acid amide and the additional polymer components, if present, as well as any optional further additives listed above, either directly, e.g., in an extruder, such that the same extruder is used to make the finished product, or by pre-melt mixing in a separate mixer or extruder. For mixing, a conventional compounding or blending apparatus, e.g. a Banbury mixer, a 2- roll rubber mill, Buss-co-kneader or a twin screw extruder may be used.

Furthermore the use of a composition as described above to reduce the scratch visibility and to lower the surface tack is inventive. By using the inventive material there can be obtained articles having a low surface tack and a reduced scratch visibility, what stands for difficult to see scratches in the surface of the article (see comparative examples 1 to 6 and inventive example).

Use of two different slip agents, namely a fatty acid amid derivative of formula (I) [b1] and a (mono-)unsaturated fatty acid amide [b2], like $CH_3(CH_2)_xCH=CH(CH_2)_yCONH_2$ with x and y being independent from each other positive integers,

in a heterophasic propylene copolymer (HECO) or in a composition comprising a heterophasic propylene copolymer (HECO), to improve scratch visibility of the heterophasic propylene copolymer (HECO) or the composition comprising the heterophasic propylene copolymer (HECO),

the improvement is determined as the scratch visibility obtained by Erichsen cross hatch test and the scratch visibility of the heterophasic propylene copolymer (HECO) or the composition comprising the heterophasic propylene copolymer (HECO) comprising the two slip agents [b1] and [b2] is least 1.0 lower (at 15N) and/or at least 1.4 lower (at 10N) than the scratch visibility of the same heterophasic propylene copolymer (HECO) or the same composition comprising the heterophasic propylene copolymer (HECO) but comprising neither [b1] nor [b2] is inventive.

Preferably the scratch visibility of the instant heterophasic propylene copolymer (HECO) or the composition comprising the heterophasic propylene copolymer (HECO) comprising [b1] and [b2] is in a range between 1.2 to 1.5 lower (at 15N), more preferred in a range between 1.3 to 1.4 lower (at 15N) and/or at in a range between 1.8 to 2.2 lower (at 10N), more preferred in a range between 1.9 to 2.1 lower (at 10N than the scratch visibility of the same heterophasic propylene copolymer (HECO) or the same composition comprising the heterophasic propylene copolymer (HECO) but comprising neither [b1] nor [b2] is inventive.

The composition of the present invention is preferably used for the production of automotive articles, like molded automotive articles, preferably automotive injection molded articles. Even more preferred is the use of the inventive composition for the production of car interiors and exteriors, like bumpers, side trims, step assists, body panels, spoilers, dashboards, interior trims.

According to a preferred embodiment of the present invention, the composition of the present invention is used for the production of automotive articles, preferably interior automotive articles, more preferably dash boards, instrument panels, door claddings, arm rests, gear sticks, shift lever knobs, mats, interior skins, trunk claddings, or interior trims.

The present invention also provides (automotive) articles, like injection molded articles, comprising at least to 60 wt.-%, preferably at least 80 wt.-%, more preferably at least 95 wt.-%, and most preferably consisting of the inventive composition. Accordingly the present invention is especially directed to automotive articles, especially to car interiors and exteriors, like bumpers, side trims, step assists, body panels, spoilers, dashboards, interior trims, comprising at least to 60 wt.-%, preferably at least 80 wt.-%, more preferably at least 95 wt.-%, and most preferably consisting of the inventive composition.

According to a preferred embodiment of the present invention, the automotive article is an interior automotive article, more preferably a dash board, instrument panel, door cladding, arm rest, gear stick, shift lever knob, mat, interior skin, trunk cladding, or interior trim.

The present invention will now be described in further detail by the examples provided below.

**EXAMPLE**

**1. Measuring Methods**

The following definitions of terms and determination methods apply for the above general description of the invention as well as to the below examples unless otherwise defined.

The **Density** was measured according to ISO 1183-1 - method A (2004). Sample preparation is done by compression moulding in accordance with ISO 1872-2:2007.

The **ethylene content** was measured with Fourier transform infrared spectroscopy (FTIR) calibrated with $^{13}C$-NMR. When measuring the ethylene content in polypropylene, a thin film of the sample (thickness about 250 μm was prepared by hot-pressing. The area of absorption peaks 720 and 733 $cm^{-1}$ was measured with Perkin Elmer FTIR 1600 spectrometer. The method was calibrated by ethylene content data measured by $^{13}C$-NMR.

**Molecular weights, molecular weight distribution (Mn, Mw, MWD)**

Mw/Mn/MWD were measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

The **$MFR_2$ (230 °C)** was measured according to ISO 1133 (230 °C, 2.16 kg load).

The **$MFR_2$ (190 °C)** was measured according to ISO 1133 (190 °C, 2.16 kg load).

**The content of xylene cold solubles (XCS, wt.-%)** was determined at 25 °C according ISO 16152; first edition; 2005-07-01.

The **gloss** was measured on injection moulded grained specimen according to DIN 67530 at an angle of 60°. The grain for gloss measurements was identical to the grain used in evaluation of scratch visibility.

**Particle size** is measured according to ISO 13320-1:1999

The **intrinsic viscosity** was measured according to DIN ISO 1628/1, October 1999 (in decalin at 135 °C).

The **tensile modulus** was measured according to ISO 527-2 (cross head speed = 1 mm/min; 23 °C) using injection moulded specimens as described in EN ISO 1873-2 (dog bone shape, 4 mm thickness).

**Scratch visibility**

To determine the scratch visibility a Cross Hatch Cutter Model 420P, manufactured by Erichsen, was used. For the tests, plaques of 70x70x4 mm size were cut from a moulded grained (grain parameters: average grain size = 1 mm, grain depth = 0.12 mm, conicity = 6°) plaque of size 140x200x4 mm. The period between injection moulding of specimens and scratch-testing was 7 days.

For testing the specimens must be clamped in a suitable apparatus as described above. Scratches were applied at a force of 10 N or 15 N using a cylindrical metal pen with a ball shaped end (radius = 0.5 mm ± 0.01). A cutting speed of 1000 mm/min was used.

A minimum of 20 scratches parallel to each other were brought up at a load of 10 N with a distance of 2 mm. The application of the scratches was repeated perpendicular to each other, so that the result was a scratching screen. The scratching direction should be unidirectional. The scratch visibility is reported as the difference of the luminance ΔL of the unscratched from the scratched areas. ΔL values were measured using a spectrophotometer that fulfils the requirements to DIN 5033. Light source for quantification of ΔL D65/10°. Measured ΔL values must be below a maximum of 1.5.

A detailed test description of the test method (Erichsen cross hatch cutter method) can be found in the article "Evaluation of scratch resistance in multiphase PP blends" by Thomas Koch and Doris Machl, published in POLYMER TESTING 26 (2007), p. 927-936.

**Surface tack**

The surface tack measurement was performed on injection moulded multigrain plaques with a film gate using the grain K29. The K29 surface is defined as a grain with a grain depth of 0.01 mm, and a minimum draft angle of 1° for ejection from the injection moulding tool. The section with this grain was cut out from the plaque with a bench shear.

To perform the experiments an Instron tensile testing machine was used (ElectroPuls E3000, Instron Deutschland GmbH, Germany) with an elastomer die tip having a diameter of 25 mm and a thickness of 5 mm. The compressive force F was -50 N, the holding time $t_H$ was 91 s, and the haul-off speed v was 55 mm/s. The tests were performed at

standard laboratory climate conditions (23°C and 50% relative humidity). Each single surface tack measurement was performed with this setup in the following way: After the elastomer (NR/SBR) tip had been cleaned and attached to the die by means of a double-side adhesive tape, the tackiness force $F_T$ of both the aluminium reference and the specimen (sample) were measured. The surface tack is reported as tack quotient $Q_T$, which was calculated by the following Equation:

$$Q_T = \frac{F_{T,\ sample}}{F_{T,\ reference}}$$

and averaged over a minimum of three successive measurements.

A detailed description of the test method for quantifying surface tack can also be found in the paper "A novel test method for quantifying surface tack of polypropylene compound surfaces" by Çakmak et al., which will be published in eXPRESS Polymer Letters in 2011.

**2. Examples**

One polymer compositions according to the present invention (IE: inventive example) and six comparative compositions (CE: comparative examples) were prepared. The components of the compositions are listed in Table 1.

The polymer compositions were prepared by melt blending the components on a corotating twin screw extruder type Coperion ZSK 40 (screw diameter 40 mm, L/D ratio 38) at temperatures in the range of 170-190°C, using a high intensity mixing screw configuration with two sets of kneading blocks.

**Table 1: Compositions**

| | unit | C1 | C2 | C3 | C4 | C5 | C6 | IE1 |
|---|---|---|---|---|---|---|---|---|
| **H-PP** | [wt.-%] | 59 | 57.8 | 57.8 | 57.8 | 57.8 | 57.8 | 57.8 |
| **talc** | [wt.-%] | 17 | 17 | 17 | 17 | 17 | 17 | 17 |
| **PP** | [wt.-%] | 12 | 12 | 12 | 12 | 12 | 12 | 12 |
| **HDPE** | [wt.-%] | 11 | 11 | 11 | 11 | 11 | 11 | 11 |
| **ESA** | [wt.-%] | - | 0.3 | - | - | - | 0.1 | 0.15 |
| **FA6** | [wt.-%] | - | - | 0.3 | - | 0.15 | 0.1 | 0.15 |
| **SR** | [wt.-%] | - | - | - | 0.3 | 0.15 | 0.1 | - |

* the remaining part to 100 wt.-% are antioxidants and colorants
H-PP is the commercial heterophasic propylene copolymer "EF015AE" of Borealis AG having a melt flow rate $MFR_2$ (230 °C) of 18 g/10min, a XCS of 29 wt.-%, and an ethylene content (C2) of 20 wt.-%,
Talc is the commercial product "Steamic T1 CA" of Luzenac having a median particle size d50 of 2.1μm.
PP is the commercial propylene homopolymer "HF955MO" of Borealis AG having a melt flow rate $MFR_2$ (230 °C) of 20 g/10min,
HDPE is the commercial high density polyethylene "MG9641B" of Borealis AG having a melt flow rate $MFR_2$ (190 °C) of 8 g/10min and a density of 964 $kg/m^3$,
ESA is the commercial erucamide "Finawax-E" of Fine Organics,
FA6 is the commercial NN'-bisstearoylethylenediamide "Licolub FA6" of Clariant,
SR is the commercial stearamide "Cordamide SR" of Croda Chemical

**Table 2: Properties**

| | **unit** | **C1** | **C2** | **C3** | **C4** | **C5** | **C6** | **IE** |
|---|---|---|---|---|---|---|---|---|
| $MFR_2$ | [g/10min] | 13.1 | 15.7 | 13.8 | 14.0 | 14.7 | 14.3 | 13.5 |

(continued)

| | unit | C1 | C2 | C3 | C4 | C5 | C6 | IE |
|---|---|---|---|---|---|---|---|---|
| Tensile modulus | [MPa] | 1769 | 1655 | 1752 | 1740 | 1732 | 1682 | 1732 |
| Gloss | [%] | 3.2 | 3.3 | 3.4 | 3.3 | 3.3 | 3.4 | 3.4 |
| Surface Tack | [-] | 2.1 | 5.8 | 5.0 | 2.2 | 1.0 | 1.4 | 1.9 |
| Scratch visibility (10N) | [-] | 4.6 | 1.6 | 4.8 | 2.8 | 3.2 | 3.1 | 1.8 |
| Scratch visibility (15N) | [-] | 8.2 | 4.5 | 8.2 | 6.0 | 6.4 | 5.7 | 4.6 |

It was found that the combination of ESA (Erucamide) and FA 6 ((N,N'-Bisstearoyl-ethylenediamide) gives a similar scratch performance than the same amount of Erucamide but considerable lower surface tack. Although with other combinations the surface tack could be decreased even further the combination of ESA and FA6 gave the best balance between surface tack and scratch resistance. Furthermore no markedly negative influence on surface gloss or mechanics was observed.

## Claims

**1.** Composition comprising

(a) a heterophasic propylene copolymer (HECO),
(b) two different slip agents, namely

(b1) a fatty acid amid derivative of formula (I)

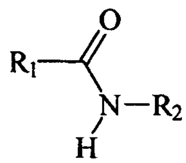

wherein

$R_1$ is a $C_5$ to $C_{25}$ alkyl residue or $C_5$ to $C_{25}$ alkenyl residue,
$R_2$ is a long-chain organic residue containing at least 6 carbon atoms,

(b2) an unsaturated fatty acid amide

wherein the fatty acid amid derivative (b1) and the unsaturated fatty acid amide (b2) are the only slip agents in the composition, and
wherein the composition comprises the fatty acid amid derivative of formula (I) and the unsaturated fatty acid amide in a range of 1000 ppm to 2000 ppm.

**2.** Composition according to claim 1, wherein the fatty acid amid derivative is of formula (Ia)

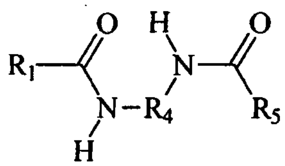

with

$R_1$ and $R_5$ being independently from each other a $C_5$ to $C_{25}$ alkyl residue,
$R_4$ being a $C_1$ to $C_6$ alkyl residue.

3. Composition according to claim 1 or 2, wherein the fatty acid amid derivative of formula (Ia) is N,N'-bisstearoylethylenediamide.

4. Composition according to claim 1 or 2, wherein the unsaturated fatty acid amide is

$$CH_3(CH_2)_xCH{=}CH(CH_2)_yCONH_2$$

with x and y being independent from each other positive integers.

5. Composition according to one of the previous claims, wherein x is a positive integer between 4 and 10 and/or y is a positive integer between 8 and 14, preferably x = 7 and y = 11.

6. Composition according to one of the previous claims, wherein the fatty acid amid derivative of formula (I) and the unsaturated fatty acid amide are contained in a relation between 0.5 : 1.5 and 1.5 : 0.5.

7. Composition according to one of the previous claims, wherein the composition comprises additionally

(c) talc
and/or
(d) polypropylene homopolymer
and/or
(e) high density polyethylene (HDPE).

8. Article comprising a composition according to one of claims 1 to 7.

9. Article according to claim 8, wherein the article is an automotive part, preferably an automotive interior part.

10. Use of a composition according to one of claims 1 to 7 for production of an article.

11. Use according to claim 10, wherein the article is an automotive part, preferably an automotive interior part.

12. Use of a composition according to one of claims 1 to 7 to reduce the scratch visibility and/or to lower the surface tack in an article.

13. Use of a fatty acid amid derivative of formula (I) [b1] and a unsaturated fatty acid amide [b2] in a heterophasic propylene copolymer (HECO) to improve scratch visibility of the heterophasic propylene copolymer (HECO),
the improvement is determined as the scratch visibility obtained by Erichsen cross hatch test and the scratch visibility of the heterophasic propylene copolymer (HECO) comprising [b1] and [b2] is least 1.0 lower (at 15N) and/or at least 1.4 lower (at 10N) than the scratch visibility of the same heterophasic propylene copolymer (HECO) but comprising neither [b1] nor [b2].

**Patentansprüche**

1. Zusammensetzung enthaltend

(a) ein heterophasisches Propylene Copolymer (HECO),
(b) zwei unterschiedliche Gleitmittel, nämlich

(b1) ein Fettsäureamidderivat der Formel (I)

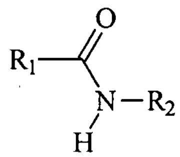

wobei

$R_1$ ein $C_5$ bis $C_{25}$ Alkylrest oder $C_5$ bis $C_{25}$ Alkenylrest ist,
$R_2$ ein langkettiger, organischer Rest ist, welcher mindestens 6 Kohlstoffatome enthält,

(b2) ein ungesättigtes Fettsäureamid,

wobei das Fettsäureamidderivat (b1) und das ungesättigte Fettsäureamid (b2) die einzigen Gleitmittel in der Zusammensetzung sind, und wobei die Zusammensetzung das Fettsäureamidderivat der Formel (I) und das ungesättigte Fettsäureamid in einem Bereich von 1000 ppm bis 2000 ppm enthält.

**2.** Zusammensetzung gemäß Anspruch 1, wobei das Fettsäureamidderivat der Formel (Ia) entspricht

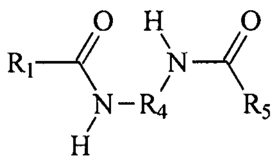

mit

$R_1$ und $R_5$ unabhängig voneinander als ein $C_5$ bis $C_{25}$ Alkylrest,
$R_4$ als ein $C_1$ bis $C_6$ Alkylrest.

**3.** Zusammensetzung gemäß Anspruch 1 oder 2, wobei das Fettsäureamidderivat der Formel (Ia) N,N'-bisstearoylethylendiamid ist.

**4.** Zusammensetzung gemäß einem der Ansprüche 1 oder 2, wobei das ungesättigte Fettsäureamid

$$CH_3(CH_2)_xCH{=}CH(CH_2)_yCONH_2$$

ist, mit x und y unabhängig voneinander als eine positive ganze Zahl.

**5.** Zusammensetzung gemäß einem der vorhergehenden Ansprüche, wobei x eine positive ganze Zahl zwischen und 4 und 10 und/oder y eine positive ganze Zahl zwischen 8 und 14 ist, vorzugsweise x=7 und y=11.

**6.** Zusammensetzung gemäß einem der vorhergehenden Ansprüche, wobei das Fettsäureamidderivat der Formel (I) und das ungesättigte Fettsäureamid in einem Verhältnis zwischen 0,5 : 1,5 und 1,5 : 0,5 enthalten sind.

**7.** Zusammensetzung gemäß einem der vorhergehenden Ansprüche, wobei die Zusammensetzung zusätzlich enthält

(c) Talk
und/oder
(d) Polypropylen Homopolymer
und/oder
(e) Polyethylen hoher Dichte (HDPE).

**8.** Artikel, umfassend die Zusammensetzung gemäß einem der Ansprüche 1 bis 7

**9.** Artikel gemäß Anspruch 8, wobei der Artikel ein Fahrzeugteil, vorzugsweise ein Fahrzeugteil der Innenausstattung.

**10.** Verwendung einer Zusammensetzung gemäß einem der Ansprüche 1 bis 7 zur Herstellung eines Artikels.

**11.** Verwendung gemäß Anspruch 10, wobei der Artikel ein Fahrzeugteil, vorzugsweise ein Fahrzeugteil der Innenausstattung ist.

**12.** Verwendung einer Zusammensetzung gemäß einem der Ansprüche 1 bis 7, um die Sichtbarkeit von Kratzern zu verringern und/oder die Oberflächenklebrigkeit in einem Artikel zu verringern.

**13.** Verwendung eines Fettsäureamidderivats der Formel (I) [b1] und eines ungesättigten Fettsäureamids [b2] in einem heterophasischen Propylen Copolymer (HECO) um die Sichtbarkeit von Kratzern des heterophasischen Propylen Copolymers (HECO) zu verbessern,
die Verbesserung wird als die Sichtbarkeit von Kratzern durch den Erichsen cross hatch Test bestimmt und die Sichtbarkeit von Kratzern des heterophasischen Propylen Copolymers (HECO) umfassend [b1] und [b2] ist mindestens 1,0 niedriger (bei 15N) und/oder mindestens 1,4 niedriger (bei 10N) als die Sichtbarkeit von Kratzern des gleichen heterophasischen Propylen Copolymers (HECO) ohne [b1] oder [b2].

## Revendications

**1.** Composition comprenant

(a) un copolymère de propylène hétérophasique (HECO),
(b) deux agents de glissance différents, à savoir

(b1) un dérivé d'amide d'acide gras de formule (I)

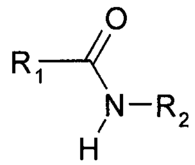

dans laquelle

$R_1$ est un résidu alkyle en $C_5$ à $C_{25}$ ou un résidu alcényle en $C_5$ à $C_{25}$,
$R_2$ est un résidu organique à longue chaîne contenant au moins 6 atomes de carbone,

(b2) un amide d'acide gras insaturé,

dans laquelle le dérivé d'amide d'acide gras (b1) et l'amide d'acide gras insaturé (b2) sont les seuls agents de glissance dans la composition, et
laquelle composition comprend le dérivé d'amide d'acide gras de formule (I) et l'amide d'acide gras insaturé à raison de 1000 ppm à 2000 ppm.

**2.** Composition selon la revendication 1, dans laquelle le dérivé d'amide d'acide gras est de formule (Ia)

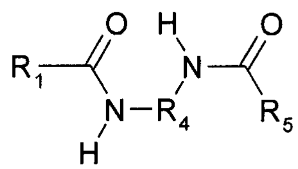

dans laquelle

$R_1$ et $R_5$, indépendamment l'un de l'autre, sont un résidu alkyle en $C_5$ à $C_{25}$,
$R_4$ est un résidu alkyle en $C_1$ à $C_6$.

**3.** Composition selon la revendication 1 ou 2, dans laquelle le dérivé d'amide d'acide gras de formule (Ia) est le N,N'-bis-stéaroyléthylènediamide.

**4.** Composition selon la revendication 1 ou 2, dans laquelle l'amide d'acide gras insaturé est

$$CH_3(CH_2)_xCH{=}CH(CH_2)_yCONH_2$$

où x et y, indépendamment l'un de l'autre, sont des entiers positifs.

**5.** Composition selon l'une des revendications précédentes, dans laquelle x est un entier positif compris entre 4 et 10 et/ou y est un entier positif compris entre 8 et 14, de préférence x = 7 et y = 11.

**6.** Composition selon l'une des revendications précédentes, dans laquelle le dérivé d'amide d'acide gras de formule (I) et l'amide d'acide gras insaturé sont présents en un rapport compris entre 0,5/1,5 et 1,5/0,5.

**7.** Composition selon l'une des revendications précédentes, laquelle composition comprend de plus

(c) du talc
et/ou
(d) du homopolymère de polypropylène
et/ou
(e) du polyéthylène haute densité (HDPE).

**8.** Article comprenant une composition selon l'une des revendications 1 à 7.

**9.** Article selon la revendication 8, lequel article est une pièce d'automobile, de préférence une pièce d'intérieur d'automobile.

**10.** Utilisation d'une composition selon l'une des revendications 1 à 7 pour la production d'un article.

**11.** Utilisation selon la revendication 10, dans laquelle l'article est une pièce d'automobile, de préférence une pièce d'intérieur d'automobile.

**12.** Utilisation d'une composition selon l'une des revendications 1 à 7 pour réduire la visibilité des rayures et/ou pour diminuer le poisseux en surface d'un article.

**13.** Utilisation d'un dérivé d'amide d'acide gras de formule (I) [b1] et d'un amide d'acide gras insaturé [b2] dans un copolymère de propylène hétérophasique (HECO) pour améliorer la visibilité des rayures du copolymère de propylène hétérophasique (HECO), l'amélioration étant déterminée par la visibilité des rayures, obtenues par un essai de quadrillage d'Erichsen, et la visibilité des rayures du copolymère de propylène hétérophasique (HECO) comprenant [b1] et [b2] étant inférieure d'au moins 1,0 (à 15 N) et/ou inférieure d'au moins 1,4 (à 10 N) à la visibilité des rayures du même copolymère de propylène hétérophasique (HECO) mais ne comprenant ni [b1] ni [b2].

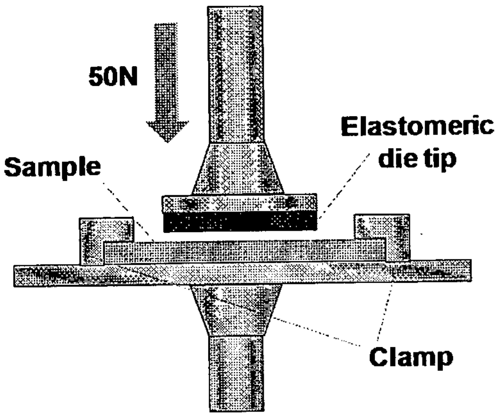


**Figure 1** Shows the testing principle for surface tack measurements.

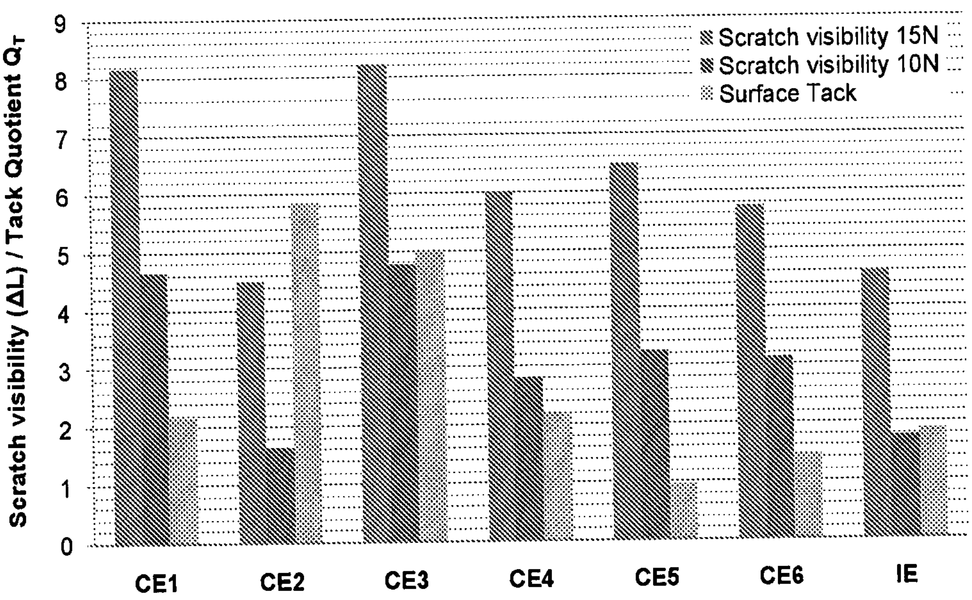


**Figure 2:** Shows the superior balance of low scratch visibility and low surface tack for the inventive example.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006131455 A1
- WO 2007139622 A3
- WO 0222731 A2
- WO 2005111145 A1
- EP 0887379 A
- WO 9212182 A
- WO 2004000899 A
- WO 2004111095 A
- WO 9924478 A
- WO 9924479 A
- WO 0068315 A


### Non-patent literature cited in the description


- **THOMAS KOCH ; DORIS MACHL.** Evaluation of scratch resistance in multiphase PP blends. *POLYMER TESTING,* 2007, vol. 26, 927-936
- **ÇAKMAK et al.** A novel test method for quantifying surface tack of polypropylene compound surfaces. *eXPRESS Polymer Letters,* 2011